# EUROPEAN PATENT APPLICATION

(11) **EP 1 774 850 A1**
(43) Date of publication of application: **18.04.2007**
(21) Application number: 06254885.4
(22) Date of filing: 20.09.2006
(51) Int. Cl.: A01K 63/00, A01K 63/06

(54) **Pet enclosure**

(30) Priority: 11.10.2005 GB 0520679
(71) Applicant: Interpet Limited, Vincent Lane Dorking, Surrey RH4 3YX (GB)
(72) Inventor: Thraves, Stuart, Bridgwater, Somerset TA7 8JP (GB); Exell, Adrian, Somerset, TA21 9DX (GB)
(74) Representative: Games, Robert Harland

(57) **Abstract**

An enclosure 10 comprises a fish tank, a control module 16 and partitions and toys 74, 76, 78, 80, which can be used to decorate the inside of the tank 12. An LCD 54 displays information associated with the fish and use of the enclosure 10, and memorable data input by a user, for example a child. The enclosure 10 provides a much greater degree of interaction between a pet and a child than has been available to date, and provides a learning tool, which assists in teaching a child how to look after a pet.

## Description

The present invention relates to a pet enclosure and particularly, but not exclusively, to a pet enclosure suitable for keeping fish, for example goldfish.

### BACKGROUND OF THE INVENTION

Keeping a pet is generally fun for a child and it is important that a child learns to care for his or her pet in a responsible way, because a pet's welfare is dependent on its owner. In particular, fish, for example goldfish, are popular pets, but may become neglected to some extent over time because a child may lack sustained interest in looking after the fish. This is partly because fish are less interactive than most other pets.

It is already known to provide an automated environmental control system for continual monitoring and controlling of an animal enclosure, such as an aquarium, for example as disclosed in EP 0253542 A1. Apparatus for controlling water temperature, water circulation and filtering, an automatic feeding device and lights of an aquarium are all controlled through a microprocessor. The microprocessor is housed in a control system which has memory, data entry and display means for setting up and operating the control apparatus. The control system can optionally be connected to more than one aquarium.

This and other such systems are intended to relieve the burden of looking after fish as much as possible, and are ideal for aquariums in business environments or home environments, where time for looking after pets is limited. However, such a system is not particularly suited to the needs of a child, who ideally should be encouraged to interact with a pet in order to sustain the child's interest over time.

### SUMMARY OF INVENTION

According to the present invention, there is provided an enclosure comprising a container for housing a pet, characterised in that the enclosure includes an integral module adapted to convey information associated with the pet to a pet keeper.

Preferably, the module includes an output means, such as a visual display.

Preferably, the display is a liquid crystal display (LCD).

The output means may also include means for emitting an audible signal.

Preferably, the module includes input means, for example, one or more press buttons or a keypad.

Preferably, the module includes at least one or a plurality of indicator lights.

The indicator lights may be different colours, each colour being adapted to convey a different meaning to the pet keeper.

Preferably, the module is connected to a controller which includes a printed circuit board and power input receiving means.

The enclosure of the invention is advantageous, because it provides a facility for increased interaction with the enclosure. This enables a child to be mentally stimulated and entertained and encourages the child to be more attentive in looking after a pet, eg a fish, housed in the enclosure.

Preferably, the container is a fish tank.

Preferably, one or more storage compartments are integrally disposed in the enclosure substantially adjacent the fish tank.

Preferably, lighting means is disposed to shine light through the fish tank.

The light may be directed either upwards or downwards through the fish tank.

Preferably, a pump and filter are provided for circulating and filtering water contained in the fish tank.

Preferably, movable partitions having cut-outs or apertures therethrough are provided for dividing the container into a plurality of linked compartments.

Preferably, the partitions are adapted to be substantially horizontally or vertically disposed and have apertures therein providing pathways around the container for fish to swim through.

Preferably, a removable lid is provided at an upper end of the container.

Preferably, a viewing aperture is provided in the removable lid.

According to a further aspect of the present invention there is provided a fish tank comprising a transparent container, and a plurality of partitions adapted to be inserted in the tank to divide the container into a plurality of linked compartments.

Preferably apertures are provided through the partitions.

Preferably indicia is carried on the faces of the partitions.

Preferably, a backdrop is provided which is adapted to be placed adjacent a rear face of the container.

It is an advantage of the invention that the fish tank can be decorated to portray a theme. The theme can be changed by inserting different partitions and a backdrop, ie having different decoration and/or shape. If the fish tank is for a boy, the partitions may depict a pirate ship, modern battleship, space station or haunted house scene. However, if the fish tank is for a girl, the partitions may depict a dolls house or mermaid castle scene. The partitions may be appropriately coloured to create a desired "atmosphere" within the tank. Accessories may also be provided to accompany the style of the partitions, for example, a cannon could be provided to accompany the pirate ship scene.

It is a further advantage of the invention that this provides a stimulating environment for the fish contained in the tank and provides more of a spectacle as the fish swim around the tank from one linked compartment to another.

According to a yet further aspect of the present invention there is provided a fish tank kit comprising a transparent container, a plurality of partition members adapted to be received in the container, and at least one insert.

### BRIEF DESCRIPTION OF THE DRAWINGS

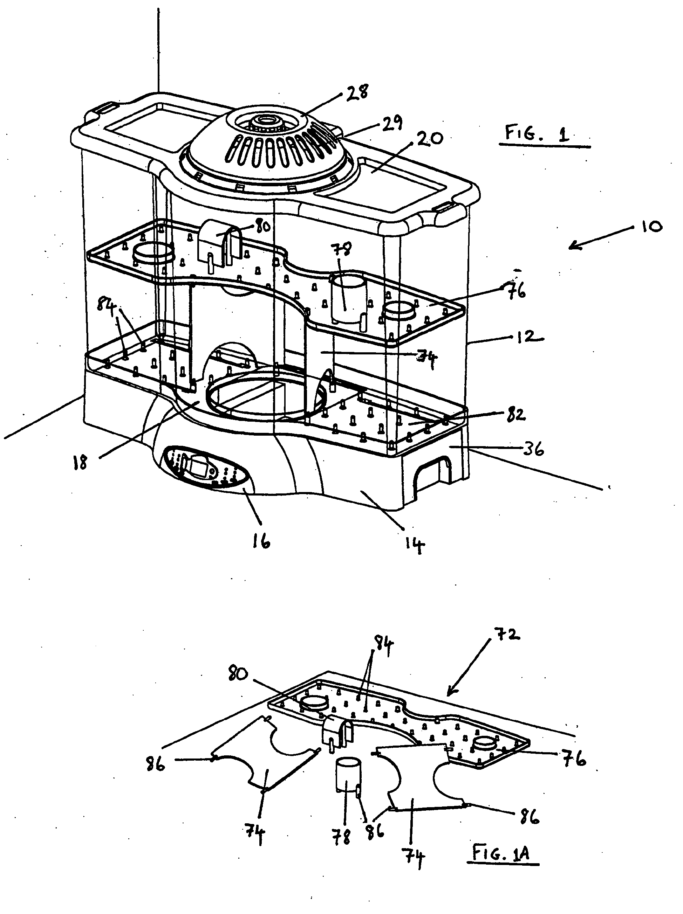

For a better understanding of the present invention, and to show more clearly how it may be carried into effect, reference will now be made, by way of example, to the accompanying drawings, in which:-
Figure 1 shows a perspective view of a pet enclosure suitable for keeping fish in accordance with the invention;
Figure 1 a shows a selection of partition walls for use with the enclosure of Figure 1;
Figure 2 shows a perspective exploded view of the enclosure of Figure 1;
Figure 3 shows an enlarged perspective view of a control module of the enclosure of Figure 1;
Figure 3a shows a front view of the module of Figure 3;
Figure 3b shows an exploded perspective view of the module of Figure 3; and
Figure 4 shows an exploded perspective view from below of the enclosure shown in Figures 1 and 2.

### DETAILED DESCRIPTION OF PREFERRED EMBODIMENTS

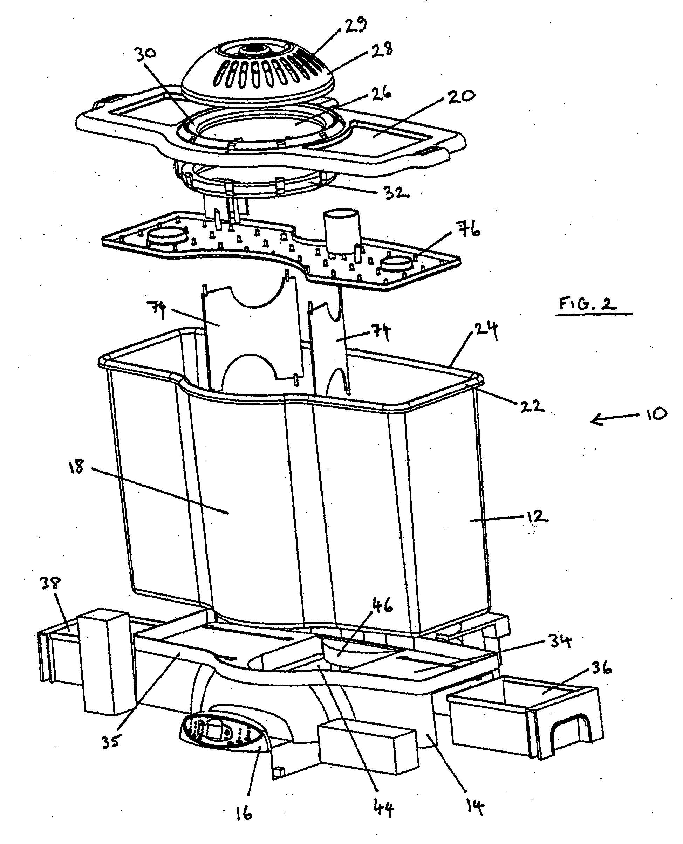

Referring firstly to Figures 1 and 2, an enclosure is indicated generally at 10 and comprises a transparent fish tank 12, a base 14 and a control module 16. The fish tank 12 is mounted on the base 14 and the control module 16 is incorporated in the base 14. The fish tank 12 is substantially rectangular with a curved portion or bay area 18 provided at the midpoint of a front wall of the tank. The fish tank 12 is made from clear plastics or glass, which enables unimpeded viewing of fish and other objects contained inside the tank.

A removable lid 20 sits on a rim 22 disposed about an upper edge 24 of the tank. A circular aperture 26 is provided through the lid 20 which is aligned with the bay area 18 of the tank 12. A removable doomed cover 28 locates on a circumferential flange 30 disposed about the periphery of the aperture 26. The cover 28 is transparent, enabling viewing of fish in the tank 12 from above and has slots 29 therein. The cover 28 may also be coated with a coating, which helps to prevent the build up of condensation.

A light 32, in the shape of a hoop, clips to the underside of the lid 20 and is coaxial with the circular aperture 26. The light 32 casts a dramatic downward light, which enhances the look of the tank at night, and facilitates viewing of the fish.

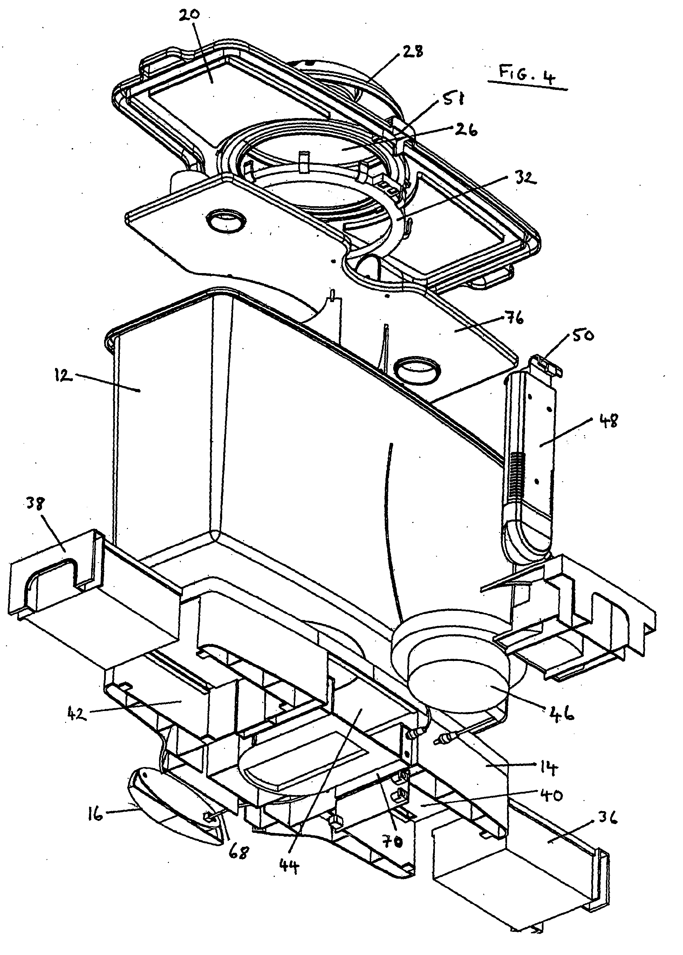

The base 14 is moulded from plastics and has an outline corresponding to that of the lower end of the tank 12. The tank 12 sits on a flat upper surface 34 of the base 14 and is retained on the base by an upwardly extending lip 35, which runs around the periphery of the base. Referring also to Figure 4, two drawers 36, 38 locate in respective apertures 40, 42 positioned at either end of the base 14. The drawers 36, 38 provide useful storage space for toys and fish food. In one embodiment, not shown, an air pump may be disposed in one of the apertures 40,42, the air pump being integrated into the construction of the enclosure 10.

An aperture 44 is also provided at the centre of the base, accessed from the rear of the base, which accommodates a further light 46. This light casts a beam of light upwardly through the tank.

A filter unit 48 incorporating the pump for circulating water in the fish tank 12 has a curved lip or hook 50 at its upper end thereof, which conveniently fits over and is supported by the rim 22 of the tank 12. The filter unit 48 extends downwardly into the tank 12 from the rim 22. A recessed portion 51 of the lid is arranged to fit over the lip 50 of the filter unit 48, so that the lid 20 is not upset on the rim 22 by the lip.

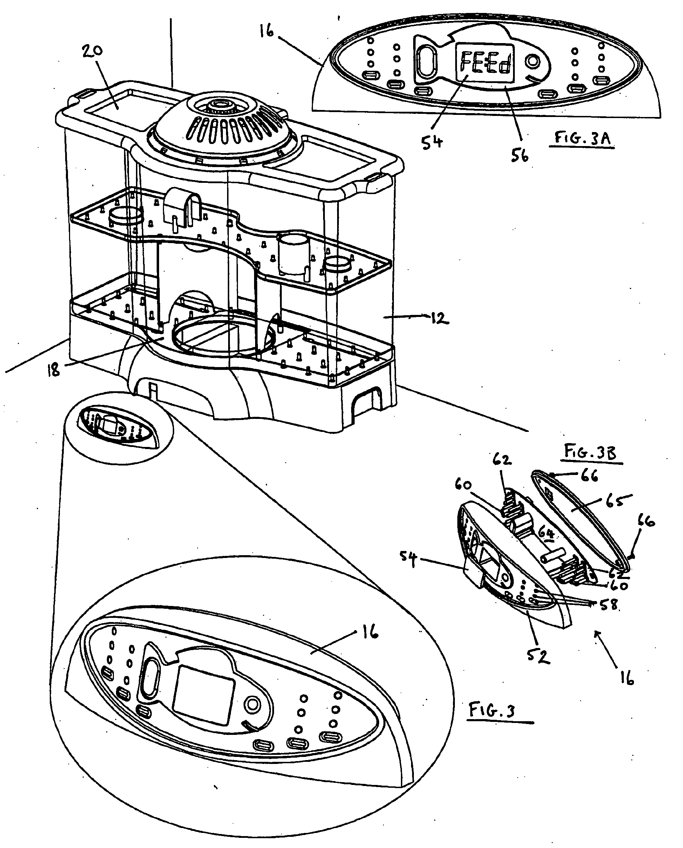

Referring also to Figures 3, 3a and 3b, the control module 16 is engaged in a recess provided in the front of the base 14 in alignment with the bay area 18 of the tank 12. The control module comprises a face plate 52, which houses a liquid crystal display (LCD) screen 54 at its centre. The LCD screen 54 is mounted in a moulded image of a fish 56. Apertures 58 are provided through the face plate 52, which receive press buttons 60 and lights 62, for example light emitting diodes, disposed on a board 64 provided at the rear of the face plate 52. A rear cover 65, attached with screws 66, closes the control module 16 from the rear. A cable 68, see Figure 4, connects the control module 16 to a controller 70, which includes a printed circuit board (not shown). Power can be supplied to the controller 70 from a mains supply or by batteries. The controller 70 is also connected to the upper and lower lights 32, 46 and the filter unit 48. The controller 70 may also include sockets for the supply of power to a heater and/or air pump. A heater (not shown) is required when the enclosure 10 is used to keep tropical fish.

In order to make the tank 12 appealing to children, a number of plastics inserts 72 are provided, some of which are shown in Figure 1A. These inserts include, inter alia, vertical partitions 74, a horizontal partition 76, a tunnel 78, a bridge 80 and a base plate 82 (see Figure 1). The base plate 82 and horizontal partition 76 are provided with spaced pegs 84 thereon, onto which tubular connectors 86 provided on the accessories, ie the vertical partitions 76, tunnel 78 and bridge 80, can engage.

The base plate 82 is inserted into the tank 12 first with the pegs 84 pointing upwardly. The vertical partitions 74 are then slotted on to the pegs 84 and the horizontal partitions engaged substantially on the upper ends of the vertical partitions. The partitions 74, 76 are substantially planar panels and are not complete barriers, which extend across the tank, but have various cut outs and apertures to provide passageways for fish to swim from compartments or "rooms" created within the tank. Other inserts or toys can be provided as desired. Partitions adapted to sit at an angle to the horizontal or vertical may also be provided. A backdrop (not shown) can also be provided, which rests adjacent the rear wall of the tank 12 and sets the scene in the tank. The backdrop is co-ordinated with the inserts, for example, a night sky image could be co-ordinated with a "spacecraft" insert.

The enclosure 10 is intended to be an interactive toy, which stimulates a child's interest in looking after a pet, ie a fish, over a period of time. The enclosure 10 is also intended to be a teaching aid for use in explaining how to look after the pet.

In use of the control module 16, a child or other user can enter names for fish and memorable data, for example birthdays and other information, using the press buttons 60. The controller stores the information and displays it on the LCD. The LCD also displays information relating to setting up of the fish tank 12 and tasks that the child needs to perform in order to keep fish contained in the tank in healthy condition. These tasks will include checking water quality, cleaning the filter, feeding the fish and changing the water contained in the tank. The warnings lights 62 may illuminate or flash to warn the child that specific tasks need carrying out. The warning lights may also illuminate or flash in combination with a message on the LCD at a particular time, for example on a birthday or other memorable date which has been programmed into the controller.

The control module 16 can also be used to assist in controlling the stocking of the tank 12 with fish. A fish tank can only support a certain number of fish of a given size in a healthy environment, due in part to the amount of dissolved oxygen in the water. The length of each of the fish contained in the tank 12 can be recorded by the child using the module 16, and the total length of all of the fish calculated by the module. When this figure exceeds that recommended for the tank, the LCD displays a warning that the "biomass is exceeded", or a warning to this effect. On seeing this warning, fish should be removed from the tank to maintain a healthy environment for the fish.

To provide further interaction between the child and the enclosure 10, the child can change the layout of the inside of the tank 12 by rearranging the positions of the partitions 74, 76 and other toys. This gives the inside of the tank a feeling of a home that the child can design and alter as they see fit.

It its simplest form, a child can set the time and date using the controller, and can select a language from a selection of languages, for example, English, German, French, Portuguese and Spanish. The system then operates as a diary system, indicating activities to be undertaken at timed intervals. These may include, for example, cleaning and feeding times. During cleaning, the décor of the tank can be changed. The system therefore acts as an education tool and is useful for parents, who are unfamiliar with fish care.

Although the enclosure has been described as an aquarium for fish, the enclosure could be a cage or other container for housing a different kind of pet, for example a mouse, gerbil, rabbit or bird.

The enclosure 10 provides a much greater degree of interaction between a pet and a child than has been available to date, and provides a learning tool, which assists in teaching a child how to look after a pet.

## Claims

1. An enclosure (10) comprising a container (12) for housing a pet, **characterised in that** the enclosure includes an integral module (16) adapted to convey information associated with the pet to a pet keeper.

2. An enclosure (10) as claimed in claim 1, in which the module (16) includes an output means (54).

3. An enclosure (10) as claimed in claim 2, in which the output means is a visual display (54).

4. An enclosure (10) as claimed in claim 2 or claim 3, in which the output means emits an audible signal.

5. An enclosure (10) as claimed in any preceding claim, in which the module (16) includes input means.

6. An enclosure (10) as claimed in claim 5, in which the input means is one or more press buttons (60) or a keypad.

7. An enclosure (10) as claimed in any preceding claim, in which the module includes at least one indicator light (62).

8. An enclosure (10) as claimed in claim 7, in which the module includes a plurality of indicator lights (62).

9. An enclosure (10) as claimed in claim 8, in which the indicator lights (62) are different colours.

10. An enclosure (10) as claimed in any preceding claim, in which the module (16) is connected to a controller (70) which includes a printed circuit board and power input receiving means.

11. An enclosure (10) as claimed in any preceding claim, in which the container is a fish tank (12).

12. An enclosure (10) as claimed in claim 11, in which one or more storage compartments (36, 38) are disposed substantially adjacent the fish tank.

13. An enclosure (10) as claimed in claim 11 or 12, in which lighting means (32, 46) is disposed to shine light through the fish tank.

14. An enclosure (10) as claimed in any one of claims 11 to 13, in which a pump and filter (48) are provided for circulating and filtering water contained in the fish tank.

15. An enclosure (10) as claimed in any preceding claim, in which movable partitions (74, 76) having cut-outs or apertures therethrough are provided for dividing the container into a plurality of linked compartments.

16. An enclosure (10) as claimed in claim 15, in which the partitions (74, 76) are adapted to be substantially horizontally and vertically disposed in the container.

17. An enclosure (10) as claimed in any preceding claim, in which a backdrop is provided which is adapted to be placed adjacent a rear face of the container.
